# EUROPEAN PATENT APPLICATION

(11) **EP 1 304 682 A1**
(43) Date of publication of application: **23.04.2003**
(21) Application number: 00440204.6
(22) Date of filing: 05.07.2000
(51) Int. Cl.: G10L 15/26

(54) **Distributed speech recognition system**

(71) Applicant: ALCATEL, 75008 Paris (FR)
(72) Inventor: Kopp, Dieter, 75328 Illingen (DE); Knoblich, Ulf, 55765 Birkenfeld (DE); Sienel, Jürgen, 71229 Leonberg (DE)
(74) Representative: van Bommel, Jan Peter

(57) **Abstract**

Distributed Speech Recognition (DSR) systems comprise terminals having a complex preprocessing unit and a network having a final processing unit. By leaving a Fast Fourier Transformation (FFT) together with a filtering function and a compression in said preprocessing unit and by shifting both a nonlinear transformation as well as a Discrete Cosine Transformation (DCT) from said preprocessing unit into said final processing unit, where both follow decompression, said terminals are of a lower complexity. By using a MEL-filter (melody-filter) which preferably is adaptable, said low complex terminals are made more flexible.

## Description

The invention relates to a terminal comprising a preprocessing unit for distributed speech recognition, with a network comprising a final processing unit, with said preprocessing unit comprising a transformator for transformating audio signals and comprising a filter for filtering transformated audio signals and comprising a compressor coupled to said filter and with said final processing unit comprising a decompressor.

A telecommunication system comprising said terminal and said network is for example known in the form of a telecommunication network for fixed and/or mobile communication, with said terminal being a fixed (PSTN, ISDN etc.) terminal (telephone, screenphone, pc etc.) or a wireless (cordless: DECT etc.) or a mobile (GSM, UMTS etc.) terminal (wireless handset etc.). Said transformator performs for example a Fast Fourier Transformation (FFT), and said compressor is for example coupled to said filter via a further transformator for performing for example a nonlinear transformation and/or a yet further transformator for performing for example a Discrete Cosine Transformation (DCT).

Such a terminal is disadvantageous, inter alia, due to having a complex structure.

It is an object of the invention, inter alia, to provide a terminal as described in the preamble, which has a lower complexity.

Thereto, the terminal according to the invention is characterised in that said compressor is coupled to said filter via a transformationless coupling.

By no longer using said further transformator and said yet further transformator between said filter and said compressor, a less complex structure has been created.

The invention is based on the insight, inter alia, that in particular in a Distributed Speech Recognition (DSR) environment, said further transformation (nonlinear) and/or said yet further transformation (DCT) can be shifted into the final processing unit.

The invention solves the problem, inter alia, of providing a terminal of a lower complexity.

A first embodiment of the terminal according to the invention is characterised in that said filter comprises a combiner for at least combining a first number of frequency-components situated at first frequencies and combining a second number of frequency-components situated at second frequencies, with said first number being smaller than said second number and with said first frequencies being lower than said second frequencies.

By introducing said combiner, said filter is a so-called MEL-filter (MEL = melody), which increases the filtering for higher frequencies.

A second embodiment of the terminal according to the invention is characterised in that said filter comprises a control input for receiving a control signal for adapting said combining.

By introducing said control input, said filter becomes adaptable, which makes said terminal more flexible.

The invention further relates to a preprocessing unit for use in a terminal comprising said preprocessing unit for distributed speech recognition, with said preprocessing unit comprising a transformator for transformating audio signals and comprising a filter for filtering transformated audio signals and comprising a compressor coupled to said filter.

The preprocessing unit according to the invention is characterised in that said compressor is coupled to said filter via atransformationless coupling.

A first embodiment of the preprocessing unit according to the invention is characterised in that said filter comprises a combiner for at least combining a first number of frequency-components situated at first frequencies and combining a second number of frequency-components situated at second frequencies, with said first number being smaller than said second number and with said first frequencies being lower than said second frequencies.

A second embodiment of the preprocessing unit according to the invention is characterised in that said filter comprises a control input for receiving a control signal for adapting said combining.

The invention yet further relates to a network comprising a final processing unit for distributed speech recognition, with a terminal comprising a preprocessing unit, with said preprocessing unit comprising a transformator for transformating audio signals and comprising a filter for filtering transformated audio signals and comprising a compressor coupled to said filter and with said final processing unit comprising a decompressor.

The network according to the invention is characterised in that said final processing unit comprises a transformator for performing a nonlinear transformation and/or a discrete cosine transformation, with said compressor being coupled to said filter via a transformationless coupling.

The invention also further relates to a final processing unit for distributed speech recognition, with said final processing unit comprising a decompressor.

The final processing unit according to the invention is characterised in that said final processing unit comprises a transformator for performing a discrete cosine transformation and/or a nonlinear transformation.

The invention also yet further relates to a method for use in a telecommunication comprising a terminal and a network, with said terminal comprising a preprocessing unit and with said network comprising a final processing unit for distributed speech recognition, with said method comprising a first step of transformating audio signals in said terminal and a second step of filtering transformated audio signals in said terminal and a third step of performing a compression in said terminal and a fourth step of performing a decompression in said network.

The method according to the invention is characterised in that said third step follows said second step transformationlessly.

A first embodiment of the method according to the invention is characterised in that said second step comprises a first substep of combining a first number of frequency-components situated at first frequencies and a second substep of combining a second number of frequency-components situated at second frequencies, with said first number being smaller than said second number and with said first frequencies being lower than said second frequencies.

A second embodiment of the method according to the invention is characterised in that said second step comprises a third substep of receiving a control signal for adapting said combining.

A third embodiment of the method according to the invention is characterised in that said method comprises a fifth step of performing a nonlinear transformation and/or a discrete cosine transformation in said network.

The document US 5,809,464 discloses a dictating mechanism based upon distributed speech recognition (DSR). Other documents being related to DSR are for example EP00440016.4 and EP00440057.8. The document EP00440087.5 discloses a system for performing vocal commanding. The document US 5,794,195 discloses a start/end point detection for word recognition. The document US 5,732,141 discloses a voice activity detection. Neither one of these documents discloses the telecommunication system according to the invention. All references including further references cited with respect to and/or inside said references are considered to be incorporated in this patent application.

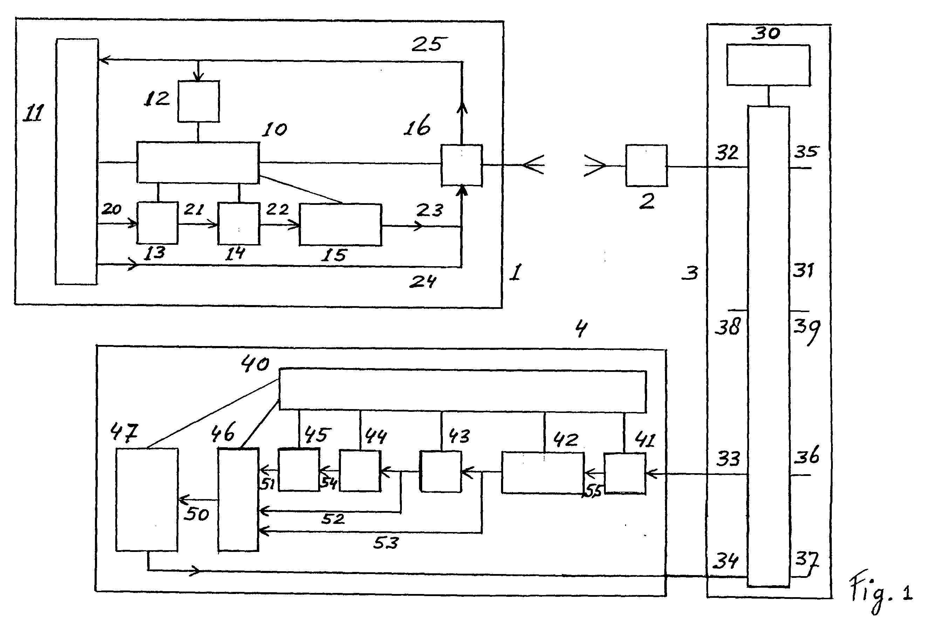

The invention will be further explained at the hand of an embodiment described with respect to drawings, whereby
figure 1 discloses a terminal according to the invention comprising a preprocessing unit according to the invention, and discloses a network according to the invention comprising a final processing unit according to the invention.

Terminal 1 according to the invention as shown in figure 1 comprises a processor 10 coupled via control connections to a man-machine-interface 11 (mmi 11), a detector 12, a Fast Fourier Transformator 13 (FFT 13), a combiner 14, a compressor 15 and a transceiver 16. A first output of mmi 11 is coupled via a connection 20 to an input of FFT 13, of which an output is coupled to an input of combiner 14, of which an output is coupled via a connection 22 to an input of compressor 15. An output of compressor 15 is coupled to an input of transceiver 16, which input is further coupled via a connection 24 to a second output of mmi 11. An output of transceiver 16 is coupled via a connection 25 to an input of mmi 11 and to an input of detector 12. An in/output of trasnsceiver 16 is coupled to an antennae. Said FFT 13, combiner 14 and (a part of) said processor 10 together form a preprocessing unit. Said combiner 14 and (a part of) said processor 10 together form a filter.

Network 2,3,4 according to the invention as shown in figure 2 comprises a base station 2 coupled via a connection 32 to a switch 3 coupled via connections 33 and 34 to a final processing unit 4. Switch 3 comprises a processor 30 and a ccoupler 31 coupled to said connections 32,33 and 34 and to connections 35,36,37,38 and 39. Final processing unit 4 comprises a processor 40 coupled via a control connections to a receiver 41, a decompressor 42, a noise reductor 43, a transformator 44 for performing a nonlinear transformation, a transformator 45 for performing a discrete cosine transformation (DCT 45), a selector 46 and a speech recognizer 47. An input of receiver 41 is coupled to connection 33, and an output is coupled to an input of decompressor 42, of which an output is coupled via a connection 53 to an input of noise reductor 43 and to a first input of selector 46. An output of noise reductor 43 is coupled via a connection 52 to an input of transformator 44 and to a second input of selector 46, and an output of transformator 44 is coupled via a connection 54 to an input of DCT 45, of which an output is coupled via a connection 51 to a third input of selector 46, of which an output is coupled via a connection 50 to an input of speech recognizer 47, of which an output is coupled to connection 34.

The telecommunication system comprising said terminal according to the invention and said network according to the invention as shown in figure 1 functions as follows.

In case of terminal 1 already being in contact with final processing unit 4, a user of terminal 1 enters speech via mmi 11, comprising for example a microphone, a loudspeaker, a display and a keyboard, which speech in the form of speech signals flows via connection 20 to FFT 13, which performs a Fast Fourier Transformation, resulting per time-interval in for example 256 frequency-components each one having a certain value. Processor 10 is informed about this, and controls FFT 13 and combiner 14 in such a way that for example, for those frequency-components situated below 1000 Hz, three subsequent frequency-components are combined into a new one, for example having a value being the average of the values of the three frequency-components and being situated at the second of the three frequency-components, and for those frequency-components situated above 1000 Hz, five subsequent frequency-components are combined into a new one, for example having a value being the average of the values of the five frequency-components and being situated at the third of the five frequency-components, or alternatively, for example, for those frequency-components situated above 1000 Hz, twice four subsequent frequency-components are combined into a new one, for example having a value being the average of the values of the four frequency-components and being situated between the second and third of the four frequency-components, and thrice five subsequent frequency-components are combined into a new one, for example having a value being the average of the values of the five frequency-components and being situated at the third of the five frequency-components etc. As a result, said 256 frequency-components per time-interval are reduced to for example 30 or 40 new frequency-components per time-interval, and a signal comprising these new frequency-components is supplied to compressor 15, which compresses said signal, which then via transceiver 16 is transmitted via base station 2 and switch 3 to final processing unit 4.

In final processing unit 4, receiver 41 receives said compressed signal and informs processor 40 of this arrival and supplies said compressed signal to decompressor 42, which generates a decompressed signal. In case of said signal requiring speaker recognition, processor 40 controls selector 46 in such a way that said decompressed signal via connection 53 is supplied to said first input of selector 46 and via selector 46 is supplied via connection 50 to speech recognizer 47. In case of said signal requiring speaker recognition with noise suppression, processor 40 activates noise reductor 43 and controls selector 46 in such a way that said decompressed signal via connection 52 is supplied to said second input of selector 46 and via selector 46 is supplied via connection 50 to speech recognizer 47. In case of said signal requiring speech recognition without noise suppression, processor 40 deactivates noise reductor 43 and controls selector 46 in such a way that said decompressed signal via transformator 44 and DCT 45 and connection 51 is supplied to said third input of selector 46 and via selector 46 is supplied via connection 50 to speech recognizer 47. In case of said signal requiring speech recognition with noise suppression, processor 40 activates noise reductor 43 and controls selector 46 in such a way that said decompressed signal via noise reductor 43 and transformator 44 and DCT 45 and connection 51 is supplied to said third input of selector 46 and via selector 46 is supplied via connection 50 to speech recognizer 47. In general, each combination should be possible.

So, by having shifted said transformator 44 and said DCT 45 from terminal 1 (prior art location) to final processing unit 4 (location according to the invention), firstly the complexity of said terminal 1 has been reduced and secondly speaker recognition and speech recognition both with or without noise suppression can be dealt with differently in said final processing unit 4. After speech recognizer 47 having recognised said signal, for example an application running in processor 10 and/or in processor 30 and/or in processor 40 or a combination of at least two of these processors needs to be informed, via connection 34 and/or via said control connection between speech recognizer 47 and processor 40, etc.

Whether speaker recognition and/or speech recognition and/or further detection (like speaker verification etc.) each one with or without noise suppression and/or name dialling and/or command & control and/or dictation is to be performed, is according to a first possibility detected by processor 40 via receiver 41 (for example by detecting a definition signal for example forming part of said compressed signal arriving via connection 33). According to a second possibility, processor 40 already knows what is required, for example due to said user having dialled a special telephone number and/or due to said user having generated a certain key signal via mmi 11 and/or due to said user having expressed his wish vocally, of for example due to an application running in processor 10 and/or in processor 30 and/or in processor 40 or a combination of at least two of these processors having informed processor 40 about this. For said second possibility, either in terminal 1 or in switch 3 or in final processing unit 4 in a memory not shown a definition signal should be stored expressing what is going on, and processor 40 needs to get that definition signal. For both possibilities, according to an advantageous embodiment, for example said definition signal is (further) supplied to terminal 1, where it arrives via transceiver 16 and connection 25 at the input of detector 12, which informs processor 10 of said definition signal. As a result, FFT 13 and combiner 14 are controlled in dependence of said definition signal: for example for name dialling (or command & control or dictation respectively), for those frequency-components situated below 1000 Hz, three subsequent frequency-components are combined into a new one, for example having a value being the average of the values of the three frequency-components and being situated at the second of the three frequency-components, and for those frequency-components situated above 1000 Hz, nine (or seven or five respectively) subsequent frequency-components are combined into a new one, for example having a value being the average of the values of the nine (or seven or five respectively) frequency-components and being situated at the fifth (or fourth or third respectively) of the nine (or seven or five respectively) five frequency-components, or alternatively, for example, for those frequency-components situated above 1000 Hz, twice (or thrice or four times respectively) four subsequent frequency-components are combined into a new one, for example having a value being the average of the values of the four frequency-components and being situated between the second and third of the four frequency-components, and thrice (or four times or five times respectively) five subsequent frequency-components are combined into a new one, for example having a value being the average of the values of the five frequency-components and being situated at the third of the five frequency-components etc. As a result, said 256 frequency-components per time-interval are reduced to for example 20 (or 30 or 40 respectively requiring more bandwidth and processor capacity respectively and offering a better performance respectively) new frequency-components per time-interval.

In case of terminal 1 and final processing unit not being in contact yet, said contact must be made before distributed speech recognition may take place, for example by said user dialling a telephone number for contacting final processing unit 4, and/or by dialling a telephone number for contacting switch 3 and then entering (further) key signals and/or speech for contacting final processing unit 4 with terminal 1 comprising a small speech recognizer not shown, and/or by entering speech for contacting switch 3 and then entering (further) key signals and/or speech for contacting final processing unit 4 with terminal 1 comprising a small speech recognizer not shown, etc.

All embodiments are just embodiments and do not exclude other embodiments not shown and/or described. All examples are just examples and do not exclude other examples not shown and/or described. Any (part of an) embodiment and/or any (part of an) example can be combined with any other (part of an) embodiment and/or any other (part of an) example.

Said terminal, base station and switch can be in accordance with IP based technology, GSM, UMTS, GPRS, DECT, ISDN, PSTN etc. Said construction of said terminal and preprocessing unit and final processing unit can be amended without departing from the scope of this invention. Parallel blocks can be connected serially, and vice versa, and each bus can be replaced by separate connections, and vice versa. Said units, as well as all other blocks shown and/or not shown, can be 100% hardware, or 100% software, or a mixture of both. Each unit and block can be integrated with a processor or any other part, and each function of a processor can be realised by a separate unit or block. Any part of said final processing unit can be shifted into said switch, and vice versa, and both can be completely integrated.

Said definition signal for example comprises a first capacity parameter having a first value (for example indicating a sampling rate 8000, bandwidth 3.4 kHz, noise reduction: no, complexity 5 wMops, purpose: name dialling) or for example comprises a second capacity parameter having a second value (for example indicating a sampling rate 11000, bandwidth 5.0 kHz, noise reduction: no, complexity 10 wMops, purpose: command & control) or for example comprises a third capacity parameter having a third value (for example indicating a sampling rate 16000, bandwidth 7.0 kHz, noise reduction: no, complexity 12 wMops, purpose: dictation).

## Claims

1. Terminal comprising a preprocessing unit for distributed speech recognition, with a network comprising a final processing unit, with said preprocessing unit comprising a transformator for transformating audio signals and comprising a filter for filtering transformated audio signals and comprising a compressor coupled to said filter and with said final processing unit comprising a decompressor, **characterised in that** said compressor is coupled to said filter via a transformationless coupling.

2. Terminal according to claim 1, **characterised in that** said filter comprises a combiner for at least combining a first number of frequency-components situated at first frequencies and combining a second number of frequency-components situated at second frequencies, with said first number being smaller than said second number and with said first frequencies being lower than said second frequencies.

3. Terminal according to claim 2, **characterised in that** said filter comprises a control input for receiving a control signal for adapting said combining.

4. Preprocessing unit for use in a terminal comprising said preprocessing unit for distributed speech recognition, with said preprocessing unit comprising a transformator for transformating audio signals and comprising a filter for filtering transformated audio signals and comprising a compressor coupled to said filter, **characterised in that** said compressor is coupled to said filter via a transformationless coupling.

5. Preprocessing unit according to claim 4, **characterised in that** said filter comprises a combiner for at least combining a first number of frequency-components situated at first frequencies and combining a second number of frequency-components situated at second frequencies, with said first number being smaller than said second number and with said first frequencies being lower than said second frequencies.

6. Preprocessing unit according to claim 5, **characterised in that** said filter comprises a control input for receiving a control signal for adapting said combining.

7. Network comprising a final processing unit for distributed speech recognition, with a terminal comprising a preprocessing unit, with said preprocessing unit comprising a transformator for transformating audio signals and comprising a filter for filtering transformated audio signals and comprising a compressor coupled to said filter and with said final processing unit comprising a decompressor, **characterised in that** said final processing unit comprises a transformator for performing a nonlinear transformation and/or a discrete cosine transformation, with said compressor being coupled to said filter via a transformationless coupling.

8. Final processing unit for distributed speech recognition, with said final processing unit comprising a decompressor, **characterised in that** said final processing unit comprises a transformator for performing a discrete cosine transformation and/or a nonlinear transformation.

9. Method for use in a telecommunication comprising a terminal and a network, with said terminal comprising a preprocessing unit and with said network comprising a final processing unit for distributed speech recognition, with said method comprising a first step of transformating audio signals in said terminal and a second step of filtering transformated audio signals in said terminal and a third step of performing a compression in said terminal and a fourth step of performing a decompression in said network, **characterised in that** said third step follows said second step transformationlessly.

10. Method according to claim 9, **characterised in that** said second step comprises a first substep of combining a first number of frequency-components situated at first frequencies and a second substep of combining a second number of frequency-components situated at second frequencies, with said first number being smaller than said second number and with said first frequencies being lower than said second frequencies.
